# EUROPEAN PATENT APPLICATION

(11) **EP 2 355 304 A2**
(43) Date of publication of application: **10.08.2011**
(21) Application number: 10190252.6
(22) Date of filing: 05.11.2010
(51) Int. Cl.: H02J 7/02

(54) **System to transmit and receive wireless power, terminal device, management server, and wireless power transmission apparatus**

(30) Priority: 28.01.2010 KR 20100007839
(71) Applicant: PANTECH CO., LTD., Seoul 121-270 (KR)
(72) Inventor: Lee, Jeong Man, Gyeonggi-do 411-752 (KR); Moon, Seyoung, Seoul 122-755 (KR); Song, Jin Hwan, Anyang-si, Gyeonggi-do 431-080 (KR); Yoon, Hyung Jun, Seoul 138-220 (KR); Lee, Kyu Sun, Geumcheon-gu, Seoul 153-861 (KR); Lee, In Bum, Seoul 157-033 (KR); Lee, Jae Hun, Seoul 157-011 (KR); Lee, Zooyoung, Seoul 152-880 (KR); Lee, Jin Suk, Gyeonggi-do 411-736 (KR); Lee, Hyoung Seok, Mapo-gu, Seoul 121-874 (KR); Lim, Kyung Kook, Seoul 121-260 (KR); Choi, Hyukjae, Seoul 153-854 (KR)
(74) Representative: Herzog, Markus

(57) **Abstract**

A system to transmit and receive wireless power, a terminal device (200), a management server (300), and a wireless power transmission apparatus may use non-radial wireless energy transmission technology to generate a resonant frequency in resonators and charge a device. The terminal device may receive the wireless power to perform charging by non-contact energy transmission.

## Description

### CROSS-REFERENCE TO RELATED APPLICATION

This application claims priority from and the benefit of Korean Patent Application No. 10-2010-0007839, filed on January 28, 2010, which is hereby incorporated by reference for all purposes as if fully set forth herein.

### BACKGROUND

1. Field

This disclosure relates to a system to transmit and receive wireless power, a terminal device, a management server, and a wireless power transmission apparatus.

2. Discussion of the Background

Wireless power transmission technology denotes technology that may wirelessly transmit energy from a power source to an electronic device over distances of both a few millimeters, or short range transmission, and a few kilometers, or long range transmission.

Short range transmission technology may transfer a relatively small output energy based on electromagnetic wave radiation. However, due to omni-directionality, that is, a characteristic of electromagnetic wave radiation, the transmission efficiency may be significantly deteriorated. In the case of a device using high power, a charge time may increase. If an output of a transmitter increases to decrease the charge time, it may cause harm to a human body. Accordingly, short range transmission technology may be inappropriate as wireless power transmission technology for wide use.

Long range transmission technology generally employs an electromagnetic wave radiation process using 2.45 GHz or 5.8 GHz microwaves. Specifically, the long range transmission technology uses higher frequencies and, thus, may be dangerous to a human body, and transmission and reception of energy may be limited to a particular area.

### SUMMARY

Exemplary embodiments of the present invention provide a system to transmit and receive wireless power, a terminal device, a management server, and a wireless power transmission apparatus that may decrease temporal or spatial constraints of wireless power transmission.

Additional features of the invention will be set forth in the description which follows, and in part will be apparent from the description, or may be learned by practice of the invention.

An exemplary embodiment of the present invention discloses a terminal device chargeable by wireless power including a communication unit to receive frequency information over a wireless network used to receive the wireless power; a target resonator to synchronize with a resonant frequency with of the frequency information, and to receive the wireless power; and a charging unit to store energy that is output from the target resonator.

An exemplary embodiment of the present invention discloses a management server for wireless power transmission, including a communication unit to receive a charge request message over a wireless network; and a control unit to control the communication unit to transmit frequency information used to transmit and receive the wireless power.

An exemplary embodiment of the present invention discloses a wireless power transmission apparatus, including a communication unit to receive a charge request message; a control unit to perform an authentication process in response to the received charge request message, and to control the communication unit to transmit frequency information used for synchronization of a resonant frequency and transmission and reception of the wireless power; and a source resonator to transmit the wireless power.

An exemplary embodiment of the present invention discloses a system to transmit and receive wireless power, including a terminal device to transmit a charge request message over a wireless network; a source resonator to transmit the wireless power to the terminal device based on frequency information used to synchronize a resonant frequency with the terminal device; and a management server to transmit the frequency information to the terminal device and the source resonator.

An exemplary embodiment of the present invention discloses a method for charging wireless power in a device, the method including transmitting a charge request message; receiving frequency information; synchronizing a target resonator of the device with a resonant frequency of the frequency information; receiving the wireless power based on the resonant frequency; storing the wireless power in the device.

An exemplary embodiment of the present invention discloses a method for controlling wireless power transmission, the method including receiving a charge request message over a wireless network; performing authentication based on the charge request message; determining if the wireless power transmission is possible based on the charge request message; transmitting frequency information including a resonant frequency at which the wireless power transmission is delivered over the wireless network; and determining a charge amount and a corresponding payment for the charge amount.

It is to be understood that both the foregoing general description and the following detailed description are exemplary and explanatory and are intended to provide further explanation of the invention as claimed

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a system to transmit and receive wireless power based on a wireless network according to an exemplary embodiment of the present invention.

FIG. 2 is a block diagram illustrating a terminal device of FIG. 1 according to an exemplary embodiment of the present invention.

FIG. 3 is a block diagram illustrating a management server of FIG. 1 according to an exemplary embodiment of the present invention.

FIG. 4 is a block diagram illustrating a wireless power transmission apparatus of FIG. 1 according to an exemplary embodiment of the present invention;

FIG. 5 is a diagram illustrating a system to transmit and receive wireless power according to an exemplary embodiment of the present invention.

FIG. 6 is a block diagram illustrating a wireless power transmission apparatus of FIG. 5.

FIG. 7 is a flowchart illustrating a method for charging wireless power at a terminal device according to an exemplary embodiment of the present invention.

FIG. 8 is a flowchart illustrating a method for wireless power transmission of a management server according to an exemplary embodiment of the present invention.

FIG. 9 is a flowchart illustrating a method for transmitting wireless power according to an exemplary embodiment of the present invention.

FIG. 10 is a flowchart illustrating a method for transmitting wireless power according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to", "receives from", or "transmits to" another element, it can be directly connected to, received from, or transmitted to the other element, or intervening elements may be present.

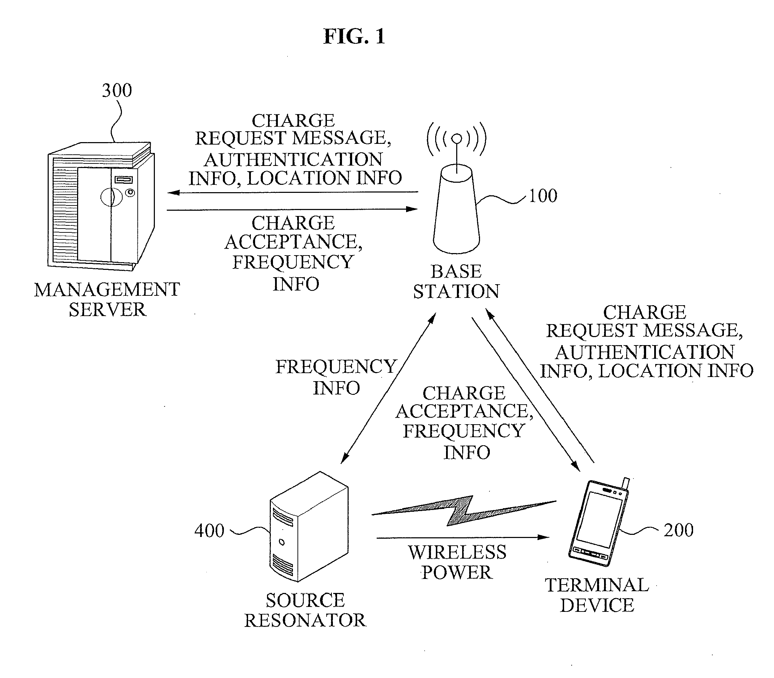

FIG. 1 is a diagram illustrating a system to transmit and receive wireless power based on a wireless network according to an exemplary embodiment of the present invention. The system may use non-radial wireless energy transmission technology to generate a resonant frequency in a source resonator 400, to realize non-contact energy transmission by receiving wireless power in a terminal device 200, to manage energy transmission of a transmitter, and to control and manage energy transmission of the terminal device 200 disposed in an energy transmission area of the transmitter. Here, a management server 300, the source resonator 400, and/or a base station 100 may correspond to the transmitter.

The non-radial wireless power transmission may be performed according to a resonant characteristic between the source resonator 400 and a target resonator (not shown) included in the terminal device 200. Specifically, if the source resonator 400 and the target resonator resonate at a same frequency, magnetic field-based energy transmission may occur due to evanescent wave coupling. In this case, energy may correspond to wireless power or resonant power.

Referring to FIG. 1, the system to transmit and receive wireless power may include a base station 100, the terminal device 200, the management server 300, and the source resonator 400.

The base station 100 may provide the terminal device 200 with a wireless communication service, and may provide a data through-path between the terminal device 200 and the management server 300 and a data through-path between the management server 300 and the source resonator 400. If a distance between the terminal device 200 and the management server 300 is included in wirelessly communicable range, the base station 100 may not be used.

The terminal device 200 may wirelessly communicate with the base station 100 over the wireless network to provide a user with a service associated with wireless communication. The terminal device 200 may transmit a charge request message to the management server 300 over the wireless network, for example, if the terminal device 200 needs to be charged or has less than a full charge. The terminal device 200 may transmit authentication information and location information to the base station 100.

The management server 300 may manage authentication of the terminal device 200 requesting the charge and also manage a payment for the charge. If the charge request message is received, the management server 300 may transmit to the terminal device 200 and the source resonator 400 frequency information used to synchronize a resonant frequency between the terminal device 200 and the source resonator 400.

The terminal device 200 may synchronize the resonant frequency based on frequency information received from the management server 300. If the resonant frequency is synchronized, the terminal device 200 may wait to receive the wireless power.

The source resonator 400 may synchronize the resonant frequency based on frequency information received from the management server 300. If the resonant frequency is synchronized, the source resonator 400 may transmit the wireless power to the terminal device 200. Accordingly, the terminal device 200 may receive the wireless power to generate energy required for the charge and then perform the charge.

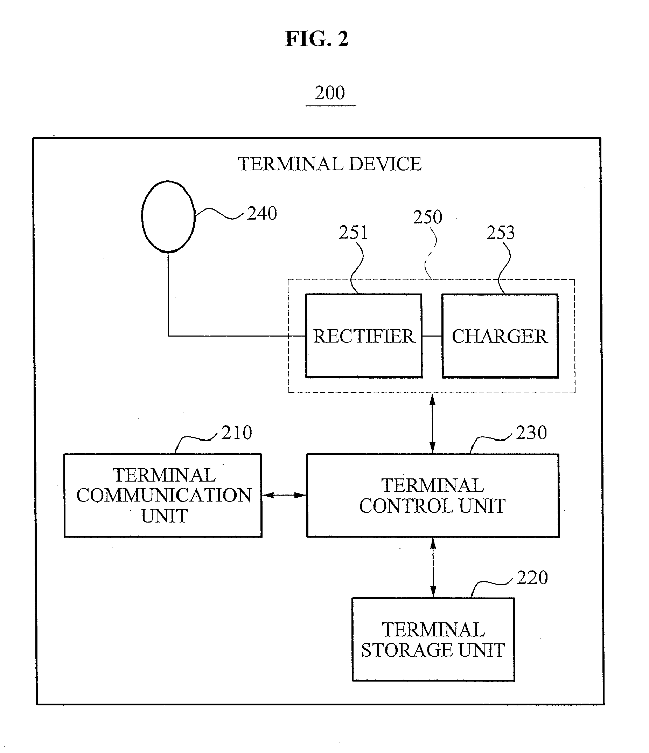

FIG. 2 is a block diagram illustrating the terminal device 200 of FIG. 1 according to an exemplary embodiment of the present invention. Referring to FIG. 2, the terminal device 200 may include a terminal communication unit 210, a terminal storage unit 220, a terminal control unit 230, a target resonator 240, and a charging unit 250.

The terminal communication unit 210 may provide a wireless communication service over the wireless network. The terminal communication unit 210 may transmit a charge request message to the management server 300. If the terminal device 200 provides the wireless communication service via the base station 100 located in the wireless network, information may be transmitted and received via the base station 100.

The terminal communication unit 210 may receive from the management server 300 a message indicating that the management server 300 accepts the charge request, and may transmit an acknowledgement (ACK) to the management server 300. The terminal communication unit 210 may receive, from the management server 300 over the wireless network and the base station 100, frequency information used to receive the wireless power, and may transfer the received frequency information to the terminal control unit 230.

Authentication information used for authentication of the terminal device 200 may be stored in the terminal storage unit 220. The authentication information may be used by the management server 300 to determine whether the terminal device 200 is authorized to receive a charge from the source resonator 400, and may include an authentication key assigned to the terminal device 200.

The terminal control unit 230 may verify a charge amount of the terminal device 200. The terminal control unit 230 may control the terminal communication unit 210 to transmit a charge request message to the management server 300. The charge request message may include authentication information used for authentication of the terminal device 200 and location information of the terminal device 200. The location information of the terminal device 200 may be verified using a Global Positioning System (GPS) receiver embedded in the terminal device 200 or may be verified by the terminal device 200 in conjunction with the base station 100.

If the terminal communication unit 210 transmits the charge request message, the management server 300 may perform an authentication process based on the authentication information, and may determine whether the terminal device 200 is authorized to receive a charge from the source resonator 400 and whether it is possible to charge the terminal device 200 based on the location information. For example, if the terminal device 200 is located within a service range of the source resonator 400 transmitting the wireless power, the management server 300 may determine it is possible to charge the terminal device 200. If it is possible to charge the terminal device 200, the management server 300 may transmit, to the terminal communication unit 210, a message indicating that the management server 300 accepts the charge request. The service range denotes a maximum range in which the wireless power is transmittable, that is, a wireless charge serving area.

The terminal control unit 230 may control the terminal communication unit 210 to transmit to the management server 300 the acknowledgement (ACK) in response to the acceptance. The management server 300 receiving the ACK may transmit to the terminal communication unit 210 and the source resonator 400 frequency information used to form the resonant frequency.

The frequency information corresponds to resonant frequency information used to synchronize frequencies of the target resonator 240 and the source resonator 400. The terminal control unit 230 may form and synchronize the resonant frequency by controlling a resonant circuit of the target resonator 240 based on the received frequency information. If the resonant frequency between the target resonator 240 and the source resonator 400 is synchronized, the source resonator 400 may wirelessly transmit to the target resonator 240 power used to charge the terminal device 200.

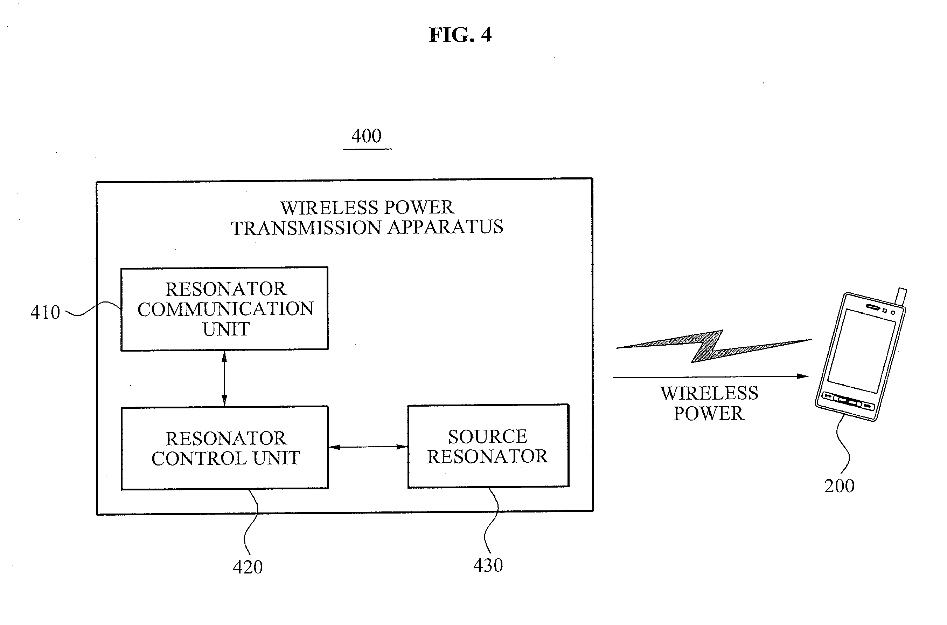

As described above, the target resonator 240 may form and synchronize the resonant frequency with the source resonator 400 based on the received frequency information, and may receive the wireless power from the source resonator 400 using the resonant frequency. The source resonator 400 may be configured as a wireless power transmission apparatus of FIG. 4 and, thus, the like reference numeral 400 will be used to describe the wireless power transmission apparatus of FIG. 4.

The charging unit 250 may charge or store energy that is output from the target resonator 240. For this, the charging unit 250 may include a rectifier 251 and a charger 253. The rectifier 251 may rectify an output signal of the target resonator 240, and the charger 253 may store an output voltage of the rectifier 251 whereby a charging process may be initiated. The charging unit 250 may be a battery.

The terminal control unit 230 may periodically verify a charge amount of charged energy and report the verified charge amount to the management server 300. If the charge is completed, the terminal control unit 230 may report a total amount of charge received in the terminal device 200 and that the charge is completed to the management server 300. The management server 300 may determine a payment based on the reported charge amount. The determined payment may be imposed upon the terminal device 200 or the source resonator 400.

If the charging process is suspended prior to completion, the terminal control unit 230 may control the terminal communication unit 210 to retransmit the charge request message to the management server 300. In response to the retransmitted charge request message, the management server 300 may retransmit frequency information used for synchronization of the resonant frequency to the terminal communication unit 210 and the source resonator 400.

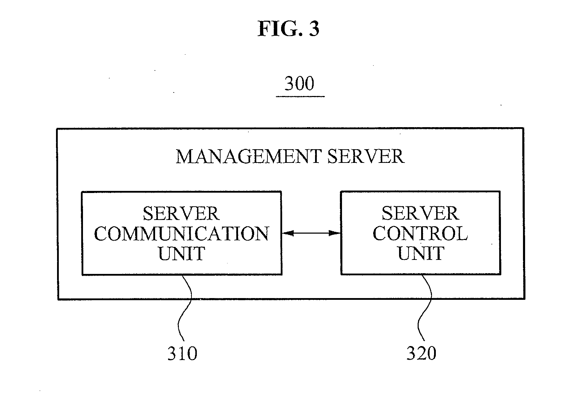

FIG. 3 is a block diagram illustrating the management server 300 of FIG. 1 according to an exemplary embodiment of the present invention. Referring to FIG. 3, the management server 300 may include a server communication unit 310 and a server control unit 320. The server communication unit 310 may receive a charge request message from the terminal device 200 over the wireless network. The server communication unit 310 may transmit, to the terminal device 200, a message indicating that the charge request is accepted. And, the server communication unit 310 may receive, from the terminal device 200, ACK in response to the message. The ACK indicates that a charge preparation is completed. The server communication unit 310 may transmit, to the terminal device 200 and the source resonator 400, information used for synchronization of the resonant frequency. The server communication unit 310 may transmit frequency information to the terminal device 200 and the source resonator 400 over the wireless network and the base station 100.

The server control unit 320 may determine whether it is possible to charge the terminal device 200 based on authentication information and location information received from the terminal device 200. The server control unit 320 may determine whether it is possible to charge the terminal device 200 based on service range information of the source resonator 400 and location information of the terminal device 200.

In response to the received charge request message, the server control unit 320 may control the server communication unit 310 to transmit, to the terminal device 200 and the source resonator 400, frequency information used if the wireless power is transmitted from the source resonator 400 and received by the terminal device 200.

Specifically, the server control unit 320 may perform an authentication process of the terminal device 200 based on authentication information included in the charge request message, and may determine whether the terminal device 200 is located within the service range of the source resonator 400. The server control unit 320 stores, determines, or receives the service range of the source resonator 400 and thus may determine whether the terminal device 200 is located within the service range based on location information of the terminal device 200. If the terminal device 200 is located within the service range, the server control unit 320 may determine it is possible to charge the terminal device 200, and may transmit a message indicating that the charge request is accepted to the terminal device 200.

If the charge preparation of the terminal device 200 is completed, the server control unit 320 may control the server communication unit 310 to transmit frequency information to the terminal device 200 and the source resonator 400. The terminal device 200 and the source resonator 400 may synchronize the resonant frequency based on the frequency information.

While the terminal device 200 receives the wireless power from the source resonator 400, the server control unit 320 may control a transmission output magnitude of resonant frequency by gathering information associated with the terminal device 200. The gathered information may include charge information, for example, a charge progress state reported from the terminal device 200, and a distance between the terminal device 200 and the source resonator 400. For example, if the distance between the terminal device 200 and the source resonator 400 increases, or if a charging speed decreases, the server control unit 320 may control the charge to be more quickly completed by increasing the transmission output magnitude.

While charging of the terminal device 200 is ongoing, the server communication unit 310 may receive again the charge request message from the terminal device 200. The server control unit 320 may determine again whether it is possible to authenticate and charge the terminal device 200, and may retransmit frequency information to the terminal device 200 and the source resonator 400.

If a charge service is a paid service, the server control unit 320 may impose a payment upon an owner of the terminal device 200 or the source resonator 400 based on a total amount of charge reported from the terminal device 200.

If a plurality of terminal devices (not shown) is located within the service range of the source resonator 400 and requests a charge, the server control unit 320 may transmit, to the source resonator 400 and the plurality of terminal devices, different frequency information used for synchronization of resonant frequency. A different resonant frequency channel may be formed between the source resonator 400 and each of the terminal devices based on the different frequency information and thus each of the terminal devices may be independently charged.

If the plurality of terminal devices is located within the service range of the source resonator 400 and requests the charge, the server control unit 320 may provide an authentication key to a terminal device having a relatively high priority among the plurality of terminal devices so that the terminal device receiving the authentication key may receive the wireless power from the source resonator 400. The server control unit 320 may transmit the frequency information to the terminal device receiving the authentication key. Accordingly, a resonant frequency may be formed between the corresponding terminal device and the source resonator 400. If completion of the charge is reported from the corresponding terminal device, the server control unit 320 may provide the authentication key to a terminal device having a second high priority, and perform the aforementioned operation.

If it is impossible to charge the terminal device 200 according to a determination of the server control unit 320, the server control unit 320 may report to the terminal device 200 that the charge is impossible, that is, it is impossible to charge the terminal device 200. The server control unit 200 may also report to the terminal device 200 reasons why the charge is impossible. The reasons may include, for example, an authentication failure, a payment fault, deterioration in a communication environment, and the like.

FIG. 4 is a block diagram illustrating a wireless power transmission apparatus 400 according to an exemplary embodiment of the present invention. The wireless power transmission apparatus 400 may correspond to the source resonator 400 of FIG. 1 and/or, as described above, the management server 300 and/or the base station 100. The wireless power transmission apparatus 400 may include a resonator communication unit 410, a resonator control unit 420, and a source resonator 430.

The resonator communication unit 410 may receive frequency information used to form and synchronize a resonant frequency from the management server 300 over the wireless network and the base station 100.

The resonator control unit 420 may control a resonant circuit of the source resonator 400 to synchronize the resonant frequency based on the received frequency information. For example, the resonator control unit 420 may adjust inductance and capacitance of the source resonator 430 for synchronization of the resonant frequency.

If the resonant frequency between the terminal device 200 and the source resonator 430 is synchronized, the source resonator 430 may transmit to the target resonator 240 of the terminal device 200 wireless power used for charging of the terminal device 200 using the resonant frequency.

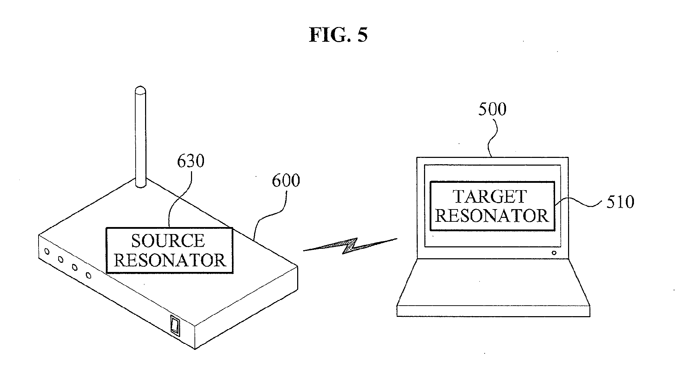

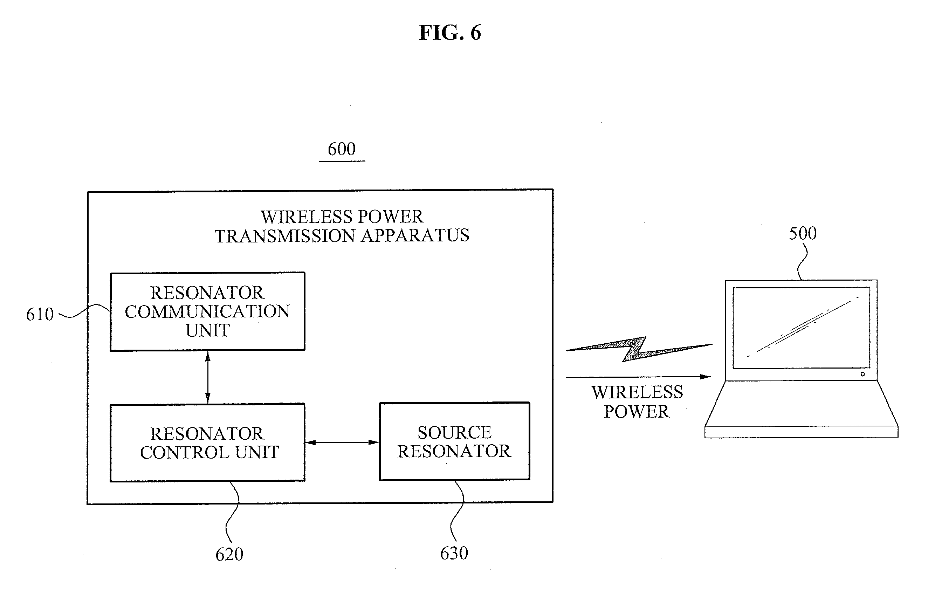

FIG. 5 is a diagram illustrating a system to transmit and receive wireless power according to an exemplary embodiment of the present invention. FIG. 6 is a block diagram illustrating a wireless power transmission apparatus 600 of FIG. 5.

Referring to FIG. 5 and FIG. 6, the system to transmit and receive the wireless power may include a terminal device 500 and the wireless power transmission apparatus 600. The terminal device 500 may perform wireless communication over a wireless network and provide a user with a service associated with the wireless communication. The terminal 500 may transmit a charge request message to the wireless power transmission apparatus 600 over the wireless network.

If a resonator communication unit 610 receives the charge request message from the terminal device 500, a resonator control unit 620 may determine whether it is possible to charge the terminal device 500, and may manage authentication of the terminal device 500 requesting the charge and a payment for the charge. If authentication information of the terminal device 500 is included in a stored authentication list, the resonator control unit 620 may determine the corresponding authentication as an authentication success; however, the authentication is not limited thereto such that the resonator control unit 620 may receive corresponding authentication information from an external source.

If it is possible to charge the terminal device 500 as a result of the determination, the resonator control unit 620 may control the resonator communication unit 610 to transmit, to the terminal device 500, frequency information used for the terminal device 500. The frequency information may be transmitted over the wireless network.

The resonator control unit 620 may control a resonant circuit of a source resonator 630 for synchronization of a resonant frequency between a target resonator 510 and the source resonator 630. If the resonant frequency with the terminal device 500 is synchronized, the source resonator 630 may transmit the wireless power to the target resonator 510.

The terminal device 500 may synchronize the resonant frequency based on frequency information received from the wireless power transmission apparatus 600. If the resonant frequency is synchronized, the terminal device 500 may receive the wireless power from the wireless power transmission apparatus 600. Accordingly, the terminal device 500 may generate energy required for the charge, and then perform the charge.

The resonator control unit 620 may impose a payment for the charge upon the terminal device 500 before, during, or after transmitting the wireless power.

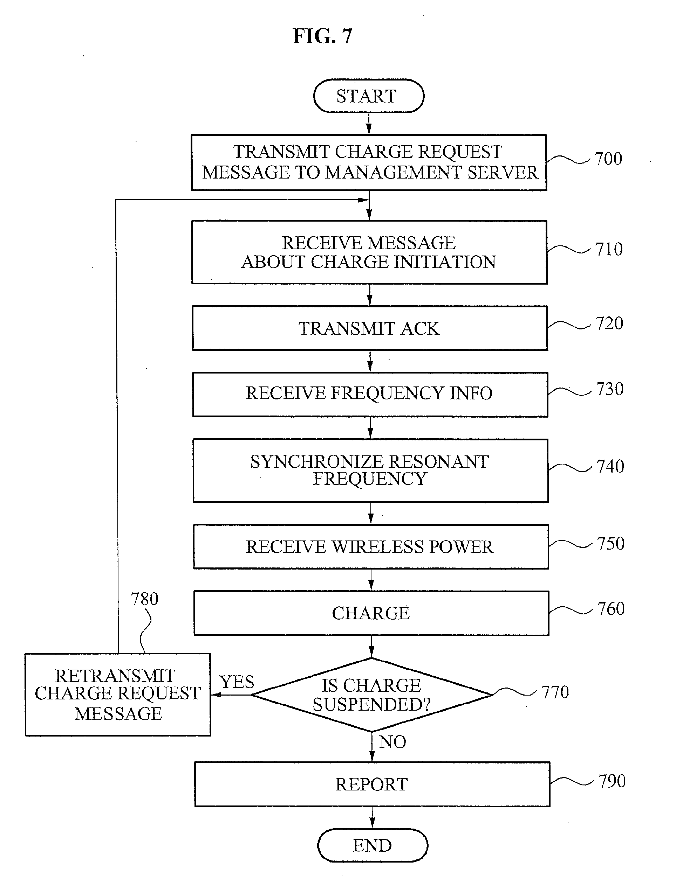

FIG. 7 is a flowchart illustrating a method for charging wireless power at a terminal device according to an exemplary embodiment of the present invention. The method may be performed by the terminal device 200.

In operation 700, if it is determined that the terminal device 200 needs to be charged, or if a charge request is received from a user, or if the terminal device 200 is charged less than a capacity or a threshold value, the terminal control unit 230 may control the terminal communication unit 210 to transmit a charge request message to the management server 300 in operation 700. The charge request message denotes a message requesting charge, and may include authentication information and location information of the terminal device 200.

In operation 710, the terminal communication unit 210 may receive from the management server 300 a message informing about a charge acceptance and inquiring about a charge initiation.

In operation 720, the terminal control unit 230 may control the terminal communication unit 210 to transmit to the management server 300 acknowledgement (ACK) in response to the message.

In operation 730, the terminal communication unit 210 may receive from the management server 300 frequency information used to receive a resonant frequency. The frequency information may include resonant frequency information used to synchronize frequencies between the target resonator 240 and the source resonator 400.

In operation 740, the terminal control unit 230 may synchronize the resonant frequency by controlling a resonant circuit of the target resonator 240 based on the received frequency information.

In operation 750, if the resonant frequency between the target resonator 240 and the source resonator 400 is synchronized, the target resonator 240 may receive the wireless power from the source resonator 400.

In operation 760, the charging unit 250 may store energy, that is, the wireless power that is output from the target resonator 240. While the wireless power is being charged, the terminal control unit 230 may periodically verify a charge state, that is, a charge amount, and may report the verified charge amount to the management server 300.

If the charging operation is suspended prior to completion in operation 770, the terminal control unit 230 may control the terminal communication unit 210 to retransmit the charge request message to the management server 300 in operation 780.

Conversely, if the charging operation is completed, the terminal control unit 230 may report a total amount of charge and a completion of the charge to the management sever 300 in operation 790. The management server 300 may determine a payment based on the reported charge amount. The determined payment may be imposed upon the terminal device 200 or the source resonator 400.

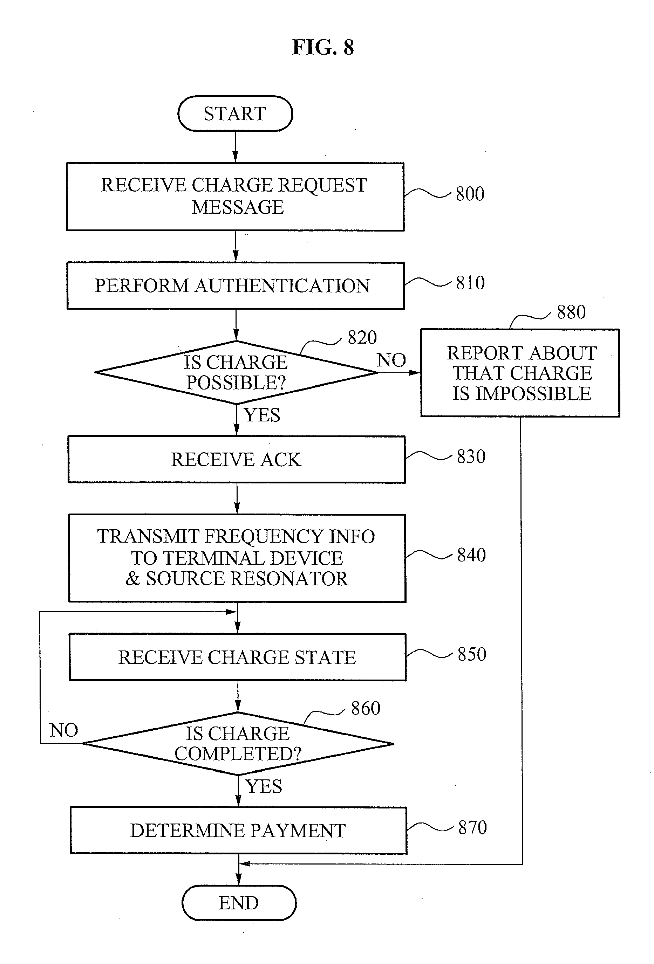

FIG. 8 is a flowchart illustrating a method for wireless power transmission of a management server according to an exemplary embodiment of the present invention. The method may be performed by the management server 300.

In operation 800, the server communication unit 310 may receive a charge request message from the terminal device 200 over a wireless network.

In operation 810, the server control unit 320 may perform authentication based on authentication information included in the charge request message.

In operation 820, the server control unit 320 may determine whether it is possible to charge the terminal device 200 based on location information received in the charge request message. If it is possible to charge the terminal device 200 as a result of the determination in operation 820, the server control unit 320 may control the server communication unit 310 to transmit to the terminal device 200 a message informing about a charge acceptance and inquiring about a charge initiation, and may receive from the terminal device 200 the acknowledgement (ACK) in response to the message in operation 830.

In operation 840, the server control unit 320 may control the server communication unit 310 to transmit to the terminal device 200 and the source resonator 400 frequency information used for synchronization of the resonant frequency.

In operation 850, the server communication unit 310 may receive a charge state of the terminal device 200 from the terminal device 200 over the wireless network. If charging of the terminal device 200 is completed or terminated in operation 860, the server communication unit 310 may receive from the terminal device 200 a report about completion of the charge and a total amount of charge received. If the charge service is a paid service, the server control unit 320 may determine a payment to be imposed upon an owner of the terminal device 200 or the source resonator 400 based on the received total amount of charge in operation 870.

If it is impossible to charge the terminal device 200 as a result of the determination in operation 820, the server control unit 320 may control the server communication unit 310 to report to the terminal device 200 that it is impossible to charge the terminal device 200 in operation 880.

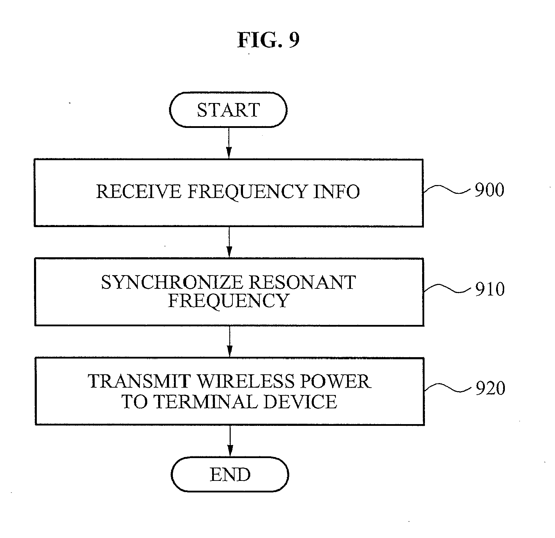

FIG. 9 is a flowchart illustrating a method for transmitting wireless power according to an exemplary embodiment of the present invention. The method may be performed by the wireless power transmission apparatus 400.

In operation 900, the resonator communication unit 410 may receive frequency information used to form and synchronize a resonant frequency from the management server 300 over a wireless network.

In operation 910, the resonator control unit 420 may synchronize the resonant frequency by controlling a resonant circuit of the source resonator 400 based on the received frequency information.

In operation 920, if the resonant frequency between the terminal device 200 and the source resonator 430 is synchronized, the source resonator 430 may transmit the wireless power to the terminal device 200.

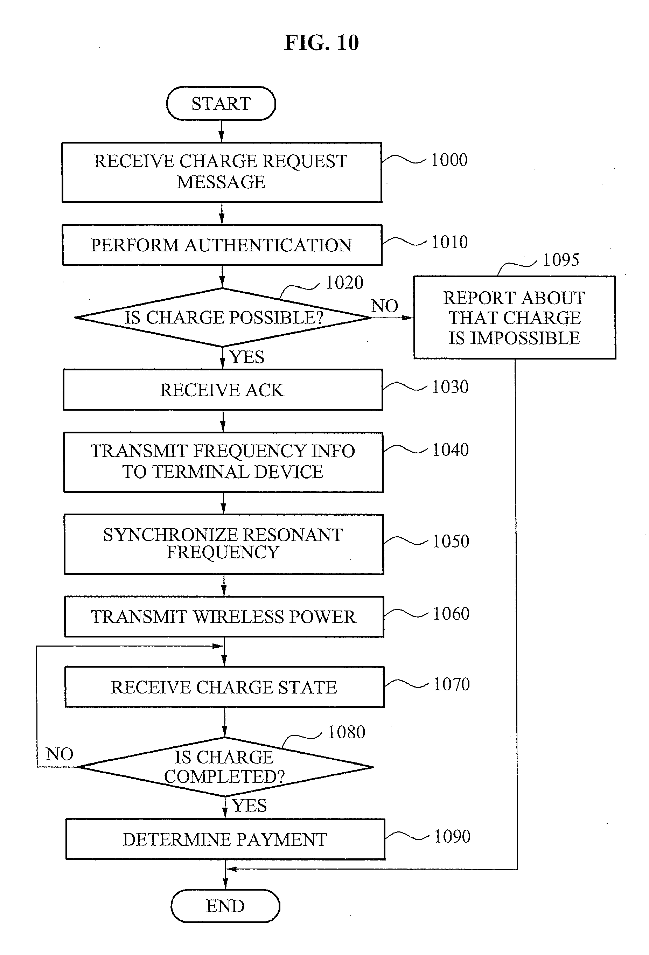

FIG. 10 is a flowchart illustrating a method for transmitting wireless power according to an exemplary embodiment of the present invention. The method may be performed by the wireless power transmission apparatus 600.

In operation 1000, the resonator communication unit 610 may receive a charge request message from the terminal device 500 over a wireless network.

In operation 1010, the resonator control unit 620 may perform authentication based on authentication information included in the charge request message.

In operation 1020, the resonator control unit 620 may determine whether it is possible to charge the terminal device 200 based on location information received in the charge request. If it is possible to charge the terminal device 200 as a result of the determination in operation 1020, the resonator control unit 620 may control the resonator communication unit 610 to transmit a message informing about a charge acceptance and inquiring about a charge initiation to the terminal device 500, and may receive ACK in response to the message from the terminal device 500 in operation 1030.

In operation 1040, the resonator control unit 620 may control the resonator communication unit 610 to transmit frequency information used to form and synchronize the resonant frequency to the terminal device 500.

In operation 1050, the resonant control unit 620 may control a resonant circuit of the source resonator 630 for synchronization of the resonant frequency between the target resonator 510 and the source resonator 630.

If the resonant frequency is synchronized with the terminal device 500, the source resonator 630 may transmit the wireless power to the target resonator 510 in operation 1060. Accordingly, charging of the terminal device 500 may be initiated.

In operation 1070, the resonator communication unit 610 may receive a charge state of the terminal device 500 from the terminal device 500 over the wireless network.

If charging of the terminal device 500 is completed or terminated in operation 1080, the resonator communication unit 610 may receive, from the terminal device 500, a report about completion of the charge and the total amount of charge transmitted to or received by the terminal device 500.

If the charge service is a paid service, the resonator control unit 620 may determine a payment to be imposed upon the terminal device 500 based on the total amount of charge transmitted to or received by the terminal device 500 in operation 1090.

If it is impossible to charge the terminal device 500 as a result of the determination in operation 1020, the resonator control unit 620 may report to the terminal device 500 that it is impossible to charge the terminal device 500 in operation 1095.

According to exemplary embodiments of the present invention, it is possible to control charging of wireless energy between a terminal device and a wireless network. A management server or a source resonator may determine whether it is possible to charge the terminal device, and initiation and termination of the charge based on one or more of a charge request of the terminal device, a battery state, location information, authentication information, and the like.

Also, according to exemplary embodiments of the present invention, a service provider may employ a wireless energy transmission service as a business model using payment information. A user of the terminal device may receive a charge service in a wireless charge service area.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM disks and DVD; magneto-optical media such as floptical disks; and hardware devices that are specially configured to store and perform program instructions, such as read-only memory (ROM), random access memory (RAM), flash memory, and the like, and combinations thereof. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their
A system to transmit and receive wireless power, a terminal device, a management server, and a wireless power transmission apparatus may use non-radial wireless energy transmission technology to generate a resonant frequency in resonators and charge a device. The terminal device may receive the wireless power to perform charging by non-contact energy transmission.

## Claims

1. A terminal device chargeable by wireless power, comprising:
a communication unit to receive frequency information over a wireless network used to receive the wireless power;
a target resonator to synchronize with a resonant frequency with of the frequency information, and to receive the wireless power; and
a charging unit to store energy that is output from the target resonator.

2. The terminal device of claim 1, wherein:
a management server transmits the frequency information to a source resonator over the wireless network, and
the source resonator synchronizes with the target resonator based on the frequency information.

3. The terminal device of claim 1 or 2, further comprising:
a control unit to determine a charge of the terminal device, and to control the communication unit to transmit a charge request message, authentication information, and location information to a management server
the management server, preferably, determining whether it is possible to charge the terminal device based on the authentication information and the location information, and/or based on the location information and range information of a source resonator that transfers the wireless power to the target resonator.

4. The terminal device of any of claims 1 to 3, further comprising:
a control unit to verify a charge amount of energy charged to the charging unit, and to report the verified charge amount to a management server,
wherein the management server determines a payment based on the charge amount.

5. The terminal device of claim 3 or 4, wherein:
if a charging process is suspended prior to completion, the control unit controls the communication unit to retransmit the authentication information and the location information to the management server, and
the management server retransmits the frequency information to the communication unit and a source resonator based on the retransmitted authentication information and location information.

6. The terminal device of any of claims 1 to 5, wherein if the communication unit provides a wireless communication service via a base station located in the wireless network, the frequency information is received via the base station.

7. A management server for wireless power transmission, comprising:
a communication unit to receive a charge request message over a wireless network; and
a control unit to control the communication unit to transmit frequency information used to transmit and receive the wireless power.

8. The management server of claim 7, wherein the communication unit transmits the frequency information to a terminal device over the wireless network and a base station, and transmits the frequency information to a source resonator over the wireless network.

9. The management server of claim 7 or 8, wherein a terminal device and a source resonator synchronize to a resonant frequency based on the frequency information.

10. The management server of any of claims 7 to 9, wherein:
the communication unit further receives authentication information and location information of a terminal device, and
the control unit determines whether it is possible to charge the terminal device based on the authentication information and the location information, and/or based on the location information of the terminal device and range information of the source resonator that transfers the wireless power to the terminal device.

11. The management server any of claims 7 to 10, wherein the control unit determines a payment to be imposed upon a terminal device or a source resonator based on a charge amount reported from the terminal device.

12. The management server of any of claims 7 to 11, wherein if a plurality of terminal devices exists within a range of a source resonator that transfers the wireless power to the plurality of terminal devices, the control unit controls a plurality of different frequency information to be transmitted to the source resonator and the plurality of terminal devices.

13. The management server of any of claims 7 to 12, wherein if a plurality of terminal devices exists within a range of a source resonator that transfers the wireless power to the plurality of terminal devices, the control unit provides an authentication key to a terminal device having a relatively high priority among the plurality of terminal devices so that the terminal device receiving the authentication key receives the wireless power.

14. The management server of any of claims 7 to 13, wherein the control unit controls an output magnitude of the resonant frequency from a source resonator based on a charged amount of a terminal device or a distance of the terminal device from the source resonator.

15. A wireless power transmission apparatus, comprising:
a communication unit to receive a charge request message;
a control unit to perform an authentication process in response to the received charge request message, and to control the communication unit to transmit frequency information used for synchronization of a resonant frequency and transmission and reception of the wireless power; and
a source resonator to transmit the wireless power.

16. The wireless power transmission apparatus of claim 15, wherein the control unit determines a payment for a charge amount with respect to a terminal device.

17. A system to transmit and receive wireless power, comprising:
a terminal device to transmit a charge request message over a wireless network;
a source resonator to transmit the wireless power to the terminal device based on frequency information used to synchronize a resonant frequency with the terminal device; and
a management server to transmit the frequency information to the terminal device and the source resonator.

18. The system of claim 17, further comprising:
a base station to provide a data through-path between the terminal device and the management server and a data through-path between the management server and the source resonator.

19. A method for charging wireless power in a device, the method comprising:
transmitting a charge request message;
receiving frequency information;
synchronizing a target resonator of the device with a resonant frequency of the frequency information;
receiving the wireless power based on the resonant frequency;
storing the wireless power in the device.

20. A method for controlling wireless power transmission, the method comprising:
receiving a charge request message over a wireless network;
performing authentication based on the charge request message;
determining if the wireless power transmission is possible based on the charge request message;
transmitting frequency information including a resonant frequency at which the wireless power transmission is delivered over the wireless network; and
determining a charge amount and a corresponding payment for the charge amount.
